# EUROPEAN PATENT APPLICATION

(11) **EP 1 426 391 A1**
(43) Date of publication of application: **09.06.2004**
(21) Application number: 03027093.8
(22) Date of filing: 25.11.2003
(51) Int. Cl.: C08G 18/28, C08G 18/08, C08G 18/70, C09D 175/04, C08G 18/12

(54) **Aqueous polyurethane dispersions and their use for preparation of coatings that are permeable to water vapor**

(30) Priority: 07.12.2002 EP 02027347
(71) Applicant: UCB, S.A., 1070 Bruxelles (BE)
(72) Inventor: Salviato, Jean-Yves, 6210 Les Bons Villers (BE); De Koninck, Luc, 1180 Ukkel (BE); Bontinck, Dirk, 9940 Ertvelde (BE)
(74) Representative: Destryker, Elise Martine

(57) **Abstract**

The present invention relates to aqueous polyurethane dispersions and their use for the preparation of coatings that are permeable to water vapor.

## Description

The present invention relates to aqueous polyurethane dispersions. The invention further relates to the use of these dispersions for the preparation of coatings which are waterproof and permeable to water vapor.

Coatings that are highly permeable to water vapor have in the past repeatedly been the object of investigations and developments, because they are particularly suitable, for example, for the manufacture of high quality leather substitutes or for the production of garments having high wearing comfort. Such coatings can be obtained from polyurethane dispersions.

Most polyurethanes used for coating compositions are dissolved or dispersed in organic solvents, but the trend towards using coating compositions containing little or no solvent favor the use of aqueous coating systems. Polyurethanes that are self-emulsifiable due to the presence of hydrophilic groups and that can therefore be dispersed in water without the aid of external emulsifiers are known. A conventional process for producing aqueous polyurethane resins includes prepolymerizing a polyol, a ionic group-containing dihydric alcohol, and a diisocyanate in a high-boiling-point organic solvent; neutralizing the prepolymer with a tertiary amine to ionize the hydrophilic groups; dispersing the neutralized prepolymer in water; and finally chain-extending the dispersed prepolymer to obtain aqueous polyurethane dispersions. However, if the ionic groups incorporated in the PU backbone are very effective as dispersing agent of the resin in water, they have no or very low impact on the water vapor permeability of the coatings. It's well know that incorporation of hydrophilic such as polyethylene glycol in the PU backbone permits to increase water vapor permeability and to obtain solvent based water vapor permeable polyurethanes. Therefore, hydrophilic non-ionic groups are also incorporated in the polyurethane backbone of the dispersions in order to obtain water vapor permeable coatings still waterproof.

Aqueous coating compositions comprising a polyurethane containing ionic groups and polyethylene oxide units, polyisocyanates, polyols and chain-lengthening agents are disclosed in US patents No. 5,716,676 and 5,747,582. The dispersions are obtained by first preparing the prepolymer comprising both, the ionic groups and the polyethylene oxide units (mainly introduced as polycarbonate of tetraethyleneglycol), and then dispersing this prepolymer in water before chain-extending the dispersed prepolymer to obtain the aqueous polyurethane dispersion.

Another method for preparing an ethoxy units containing aqueous polyurethane dispersion is disclosed in DE 195 48 030 A1. An isocyanate-blocked prepolymer comprising ionic groups and ethoxy units is dispersed in water and mixed with a chain-extender. Chain extension of the prepolymer occurs at high temperature during the film formation process. No improvement of the water vapor permeability is claimed in this patent.

In US patent No. 5,959,003 a process for producing particulate aqueous polyurethane dispersions is described. This process comprises the steps of (a) forming a first prepolymer by reacting a first polyol with a first diisocyanate and a first hydrophilic ionic group-containing dihydric alcohol; (b) forming a second prepolymer by reacting a second polyol with a second diisocyanate and a second hydrophilic group-containing dihydric alcohol; (c) dispersing the first prepolymer and the second prepolymer in water; and (d) chain-extending the dispersed prepolymers to obtain a dispersion of core-shell polyurethane particles. In all examples of this document both the first hydrophilic group-containing dihydric alcohol and the second hydrophilic group-containing dihydric alcohol are 2,2-dimethylolpropionic acid, i.e. both prepolymers contain ionic groups, content in the prepolymer (a) is (much more) higher.

The prior art coating compositions demonstrate that it is difficult to obtain an optimum combination of dispersability of the polyurethane in water with high permeability to water vapor and sufficient water resistance of the coatings, such as required for coating compositions used for the preparation of water vapor permeable coatings. In particular obtaining water vapor permeable coatings from polyurethane dispersions useful for textile coating is not easy, because the combination of ionic groups (needed for the stability of the dispersions) and non-ionic groups (needed for obtaining a high water vapor permeability) results in polyurethane resins showing some solubility in water. However, water-soluble polyurethane resins result in dispersions having a very high viscosity. Water vapor permeable polyurethane dispersions are therefore much more viscous than non-water vapor permeable polyurethane dispersions and, consequently, can only be prepared at low solids content. The properties such as sensitivity to water, tenacity, etc., of films obtained from such dispersions are also not optimum. Decreasing the content of non-ionic groups in the polyurethane polymer is, however, not a solution to this problem, because it reduces also drastically the water vapor permeability of the coatings obtained.

Thus, there is still a need for aqueous polyurethane dispersions from which water vapor permeable coatings can be obtained and which have low viscosity at high solids content.

Consequently, the present invention aims at providing a polyurethane dispersion having a low viscosity at high solids content and being useful for preparing films and coatings which are highly water vapor permeable, present excellent mechanical properties or cure easily.

It has now surprisingly been found that the above problems can be solved by an aqueous polyurethane dispersion prepared from two different prepolymers, the first one being a hydrophilic NCO-terminated polyurethane prepolymer containing ionic hydrophilic groups and being essentially free of non-ionic hydrophilic groups, and the second one being a hydrophilic NCO-terminated polyurethane prepolymer containing non-ionic hydrophilic groups and being essentially free of ionic hydrophilic groups.

The present invention thus relates to an aqueous polyurethane dispersion, obtainable by a method comprising the step of chain extension of a blend comprising
a) a hydrophilic NCO-terminated polyurethane prepolymer (PPA) containing ionic hydrophilic groups, said prepolymer being essentially free of non-ionic hydrophilic groups, and
b) a hydrophilic NCO-terminated polyurethane prepolymer (PPB) containing non-ionic hydrophilic groups, obtained from the reaction of non-ionic hydrophilic polyols, diisocyanates and optionally short chain polyols, said prepolymer being essentially free of ionic hydrophilic groups.

The hydrophilic NCO-terminated prepolymer (PPA) containing ionic hydrophilic groups used in the preparation of the aqueous polyurethane dispersion of the present invention is essentially free of non-ionic hydrophilic groups. "Essentially free" means that the content of non-ionic hydrophilic groups in the prepolymer PPA is low enough to have essentially no and preferably no influence on the physical properties both of the aqueous polyurethane dispersion and coatings obtained from such dispersion compared to a dispersion which is prepared from a prepolymer PPA being free of non-ionic hydrophilic groups. Preferably, the prepolymer PPA should contain less than 5% wt., more preferably less than 1% wt. and most preferably less than 0.1% wt. non-ionic hydrophilic groups, such as ethoxy groups, based on the total weight of the prepolymer PPA. Advantageously, the prepolymer PPA is free of non-ionic hydrophilic groups.

The NCO-terminated prepolymer PPB containing non-ionic hydrophilic groups used in the preparation of the aqueous polyurethane dispersion of the present invention is essentially free of ionic hydrophilic groups. "Essentially free" means that the content of ionic hydrophilic groups in the prepolymer PPB is low enough to have essentially no and preferably no influence on the physical properties of the aqueous polyurethane dispersion and coatings obtained from such dispersion compared to a dispersion which is prepared from a prepolymer PPB which is free of ionic hydrophilic groups. Preferably, the prepolymer PPB contains less than 0.3 meq/100 g of ionic groups, more preferably less than 0.1 meq/100 g of ionic groups and most preferably less than 0.01 meq/100 g of ionic groups. Advantageously, the prepolymer PPB is free of ionic hydrophilic groups.

The prepolymers PPA and PPB may be prepared in known manner, either solvent-free or, preferably, in an organic solvent.

The polyurethane prepolymers PPA and PPB are obtainable by reacting polyols with diisocyanates. In this reaction the isocyanate groups in the diisocyanates should be in excess compared to the hydroxy groups in the polyols in order to obtain prepolymers having free NCO groups, i.e. NCO-terminated prepolymers. Preferably, the ratio of NCO groups in the diisocyanates to OH groups in the polyols should be between 1.0 and 3.0, preferably between 1.1 and 2.0 and most preferably in the range of 1.2 to 1.9.

The diisocyanates used in the preparation of the prepolymers PPA and PPB may be aromatic or aliphatic isocyanates such as tetramethylene diisocyanate, hexamethylene diisocyanate, dodecamethylene diisocyanate, 1,4-diisocyanatocyclohexane, 3-isocyanatomethyl-3,3,5-trimethylcyclohexylisocyanate (isophorone diisocyanate), 4,4'-diisocyanatodicyclohexylmethane, 4,4'-diisocyanato-3,3'-dimethyldicyclohexylmethane, 4,4'-diisocyanatodicyclohexylpropane-(2,2), 1,4-diisocyanatobenzene, 2,4- or 2,6-diisocyanato-toluene or mixtures of these isomers, 4,4'-, 2,4'- or 2,2'-diisocyanatodiphenylmethane or mixtures of these isomers, 4,4'-diisocyanatodiphenylpropane-(2,2), p-xylylene diisocyanate and α,α,α',α'-tetramethyl-m- or -p-xylylene diisocyanate, and mixtures of these compounds.

Particularly preferred aromatic diisocyanate is toluene diisocyanate and particularly preferred aliphatic diisocyanates are isophorone diisocyanate, methylene-bis-cyclohexylisocyanate, 1,6-hexane diisocyanate and tetramethylxylene diisocyanate.

The higher functional polyisocyanates known from polyurethane chemistry and known modified polyisocyanates, such as polyisocyanates containing carbodiimide groups, allophanate groups, isocyanurate groups, urethane groups, and/or biuret groups, may, of course, also be used as all or part of the polyisocyanate component.

The reactants used for the diisocyanates in the preparation of the prepolymer PPA are hydrophobic polyols, polyols containing ionic groups and optionally short chain polyols.

Preferably, the hydrophobic polyols are long chain polyols of a number average molecular weight (Mw) between 500 and 6000 belonging to the families of the OH-terminated polyesters, polycarbonates or polyethers. Advantageously, the hydrophobic polyols have a functionality between 2 and 8, preferably between 2 and 3, i.e. the polyols contain from 2 to 8 and preferably from 2 to 3 hydroxyl groups per molecule.

Suitable hydroxyl group-containing polycarbonates are obtainable by the reaction of carbonic acid derivatives such as diethyl or dipropyl carbonate or phosgene with diols. Suitable diols include ethylene glycol, 1,2- and 1,3-propanediol, 1,4- and 1,3-butanediol, 1,6-hexanediol, 1,8-octanediol, neopentyl glycol, 1,4-bis(hydroxymethyl)cyclohexane, 2-methyl-1,3-propanediol, 2,2,4-trimethyl-1,3-pentanediol, 1,5-pentanediol, 3-methyl-1, 5-pentanediol, polypropylene glycol, dibutylene glycol, polybutylene glycol, bisphenol A, and tetrabromobisphenol A. The diol component may contain from 40 to 100% by weight of hexanediol, preferably 1,6-hexanediol, and/or hexanediol derivatives, preferably those containing ether or ester groups in addition to OH end groups, for example, products obtained by the reaction of 1 mol of hexanediol with at least 1 mol (preferably 1 to 2 mol) of caprolactone or by the autoetherification of hexanediol to form di- or trihexylene glycol.

The hydroxyl polycarbonates are preferably mainly linear but may, if desired, be slightly branched by the incorporation of polyfunctional components, in particular low molecular weight polyols. Glycerol, 1,2,6-hexanetriol, 1,2,4-butanetriol, trimethylolpropane, pentaerythritol, quinitol, mannitol and sorbitol, methyl glycoside, and 1,4,3,6-dianhydrohexitols, for example, are suitable for this purpose.

Suitable polyether polyols other than those described above include the polyethers known in polyurethane chemistry. For example, the addition or mixed addition compounds of tetrahydrofuran, styrene oxide, propylene oxide, the butylene oxides, or epichlorohydrin obtained by reaction with divalent starter molecules such as water, the above-mentioned diols, in particular the addition or mixed addition compounds of propylene oxide.

Examples of suitable polyester polyols include the reaction products of polyvalent (preferably divalent) alcohols, optionally together with trivalent alcohols, with polybasic (preferably dibasic) carboxylic acids. Instead of using free polycarboxylic acids, the corresponding polycarboxylic acid anhydrides or corresponding polycarboxylic acid esters of lower alcohols or mixtures thereof may be used for the preparation of the polyesters. The polycarboxylic acids may be aliphatic, cycloaliphatic, aromatic, and/or heterocyclic and may be substituted (e.g., by halogen atoms) and/or unsaturated. Examples of suitable polycarboxylic acids and derivatives thereof include succinic acid, adipic acid, suberic acid, azelaic acid, sebacic acid, phthalic acid, isophthalic acid, trimellitic acid, phthalic acid anhydride, tetrahydrophthalic acid anhydride, hexahydrophthalic acid anhydride, tetrachlorophthalic acid anhydride, endomethylene tetrahydrophthalic acid anhydride, glutaric acid anhydride, maleic acid, maleic acid anhydride, fumaric acid, dimerised and trimerised fatty acids such as oleic acid optionally mixed with monomeric fatty acids, terephthalic acid dimethyl ester and terephthalic acid bis-glycol ester. Examples of suitable polyhydric alcohols include ethylene glycol, 1,2- and 1,3-propanediol, 1,4-, 1,3- and 2,3-butanediol, 1,5-pentanediol, 1,6-hexanediol, 1,8-octanediol, neopentyl glycol, cyclohexanedimethanol, 1,4-bis(hydroxymethyl)cyclohexane, 2-methyl-1,3-propanediol, 3-methyl-1,5-pentanediol,glycerol, trimethylolpropane, 1,2,6-hexanetriol, 1,2,4-butanetriol, trimethylolethane, pentaerythritol, quinitol, mannitol and sorbitol, methylglycoside, diethylene glycol, triethylene glycol, tetraethylene glycol, dipropylene glycol, dibutylene glycol, and polybutylene glycols.

In a preferred embodiment of the present invention the OH-terminated polyester used in the preparation of the prepolymer PPA is based on an aliphatic diacid of the formula HOC-(CH2)n-COOH wherein n is an integer from 3 to 12 or dimerised fatty acids. Phthalic anhydride or isophthalic acid can partially replace the aliphatic diacid. As diol can be used aliphatic diols such as HO-(CH2)n-OH (n = 2 to 12), neopentyl glycol, 2,2-ethyl, butyl propanediol, propylene glycol, 1,3-butanediol, 2-methylpropanediol, 3-methylepentane-1,5-diol, or cycloaliphatic diols such as cyclohexanedimethanol or hydrogenated bisphenol A. Polyesters obtained from lactones such as polycaprolactone or polyvalerolactone are also useful.

Preferred polycarbonates are aliphatic polycarbonates corresponding to the structure HO-R'(-O-CO-O-R')n-OH (n = 2 to 12) wherein R' defines a hydrocarbon residue obtained with the same diols as the polyester resins described above.

The polyethers are preferably obtained from propylene oxide and tetrahydrofuran and can also be propoxylated bisphenol A.

As further component the prepolymer PPA used in the preparation of the aqueous polyurethane dispersion of the present invention contains residues of polyols containing ionic groups.

Ionic groups for the prepolymers PPA generally include alkali metal and ammonium carboxylate and sulfonate groups and ammonium groups. Suitable components for introducing these ionic groups into the prepolymers PPA include dihydroxycarboxylic acids, diaminocarboxylic acids, dihydroxysulfonic acids, and diaminoalkylsulfonic acids and their salts, for example, dimethylolpropionic acid, ethylenediamino-β-ethylsulfonic acid, ethylenediaminopropyl- or -butyl-sulfonic acid, 1,2- or 1,3-propylenediamine-β-ethylsulfonic acid, lysine, 3,5-diaminobenzoic acid, and their alkali metal and/or ammonium salts, as well as the adduct of sodium bisulfite with 2-butene-1,4-diol. Polyester, polycarbonate or polyether obtaining by using such ionic diols as starter can also be used i.e. polycarbonate made with dimethylol propionic acid as initiator.

Examples of cationic or potentially cationic starting components include diols having tertiary amino groups, such as N-methyl-diethanol-amine and its protonation or alkylation products.

In a preferred embodiment of the present invention the polyol containing ionic groups is a diol containing acid groups belonging to the family of the alkyl carboxylates, sulphonates and phosphonates. The preferred ionic diol is dimethylolpropionic acid (DMPA).

Optionally the prepolymers PPA and PPB may comprise residues of short chain polyols. Short chain polyols are preferably short chain diols such as the same diols that can be used to synthesize the polyesters and polycarbonates described above. Short chain diols include a wide variety of diols such as, for example:
a) Alkane diols such as ethylene glycol, 1,2- and 1,3-propanediol, 1,4-butanediol, 1,5-pentanediol, dimethyl-1,3-propanediol, and 1,6-hexanediol;
b) Ether diols such as diethylene glycol, triethylene glycol, or hydroquinone dihydroxyethyl ether;
c) Ester diols corresponding to the following general formulas:

   HO-(CH2)x-CO-O-(CH2)y-OH

   and

   HO-(CH2)x-O-CO-R-CO-O-(CH2)x-OH

   wherein
   - R: denotes an alkylene or arylene group having 1 to 10 (preferably 2 to 6) carbon atoms,
   - x: is from 2 to 6, and
   - y: is from 3 to 5,
   for example, δ-hydroxybutyl-ε-hydroxycaproic acid ester, ω-hydroxyhexyl-γ-hydroxybutyric acid ester, adipic acid β-hydroxyethyl ester, and terephthalic acid bis(β-hydroxyethyl) ester.

Preferred short chain polyols are ethylene glycol, 1,4-butanediol and cyclohexanedimethanol.

The prepolymers PPA used in the preparation of the aqueous polyurethane dispersion of the present invention may, for example, contain 50-80 % wt. residues of hydrophobic polyols, 15-45 % wt. residues of diisocyanate, 3-12 % wt. residues of polyols containing ionic groups and optionally the remaining to 100% wt., and preferably 32-10 % wt., residues of short chain polyols, based on the total weight of the prepolymer PPA.

The prepolymer PPB used in the preparation of the aqueous polyurethane dispersion of the present invention usually contains residues of non-ionic hydrophilic polyols, residues of diisocyanates and optionally short chain polyols. The diisocyanate and short chain polyols useful for the preparation of the prepolymer PPB may be the same as described above for the prepolymer PPA. Preferably the prepolymer PPB does not contain any short chain polyols.

The non-ionic hydrophilic polyols used in the preparation of the prepolymer PPB are preferably polyols with a functionality from 2 to 8, more preferably from 2 to 3 and most preferably from 2 to 2.2, wherein the functionality defines the number of hydroxyl groups per molecule. The non-ionic hydrophilic polyols are preferably long chain polyethers having a number average molecular weight (Mw) between 400 and 6000.

The hydrophilicity can be imparted to the non-ionic hydrophilic polyols by introducing polyethylene oxide units including homopolyethylene glycols and ethylene oxide copolyethers containing hydroxyl end groups and having a block or random distribution. Preferred non-ionic hydrophilic polyols contain in general at least 30% wt., preferably at least 50% wt. and more preferably at least 70% wt,. polyethylene glycol. The polyols may be a polymer of ethylene oxide units or a copolymer of ethylene oxide with propylene oxide, tetrahydrofuran and/or ethoxylated bisphenol A.

In a preferred embodiment the prepolymer PPB contains 60-90% wt. residues of non-ionic hydrophilic polyols, 10-40% wt. residues of diisocyanates and optionally the remaining to 100% wt. residues of short chain diols, based on the total weight of the prepolymer PPB.

Conveniently the two prepolymers PPA and PPB are separately synthesized in a known manner. The prepolymers obtained are then dispersed in an aqueous fluid by any known process, for example, by mixing the polyurethane with water in an apparatus capable of producing high shearing gradients, by using very small quantities of organic solvents for decreasing the viscosity of the polyurethane prepolymers in the same apparatus, or by using non-mechanical dispersing agents such as extremely high frequency sound waves. On the other hand, simple mixing apparatus, such as stirrer vessels or so-called through flow mixtures may be used, since the prepolymers are self-dispersible.

The prepolymers, PPA and PPB may be mixed with each other before dispersing the blend in the aqueous fluid or, alternatively, said prepolymers may be dispersed in the aqueous fluid simultaneously. According to another variant, the prepolymer PPA (or PPB) may be dispersed in the aqueous fluid in a first step, the other prepolymer PPB (or PPA) is then added to this first dispersion.

If desired, control of the molecular weight of the polyurethane can be obtained by addition of monofunctional alcohols or isocyanates during the preparation of the prepolymers. Incorporation of methoxylated or ethoxylated polyethylene glycol to the non-ionic hydrophilic prepolymer PPB is especially well suitable.

If present, the acid groups of the prepolymer PPA containing ionic hydrophilic groups may be neutralized with alkaline (Na, K, Li) hydroxide, carbonate or hydrogenocarbonate or with tertiary amines. Aliphatic, cycloaliphatic or alcohol amines with a pKa ≥ 8 can also be used. The most preferred amines are triethylamine, ethyl or methyl morpholine, 2-methylamino-2-methyl-1-propanol, N,N-dimethylethanolamine, N-methylpiperidine, N-ethylpiperidine and dimethylcyclohexylamine.

If present, the basic groups of the prepolymer PPA containing ionic hydrophilic groups may be neutralized with organic or inorganic acids having a pKa of at most 5 or with quaternization agents such as dialkylsulfates. Preferably used are acetic acid, glycolic acid, dimethylsulfate and chlorhydric acid.

The prepolymers or the prepolymers mix are generally too viscous to be dispersed in water without dilution with an organic solvent. Preferred organic auxiliary solvents include, for example, amides such as N,N-dimethylformamide, N,N-dimethylacetamide, and N-methylpyrrolidone; ketones such as acetone, methylethylketone, and cyclohexanone; and esters such as propylene glycol diacetate and di or mono propylene glycol methyl ether acetate. The quantity of organic auxiliary solvents is preferably up to 10% wt., more preferably up to 5% wt., based on the total amount of aqueous fluid. For easy dispersion of the prepolymers in the aqueous fluid it may be advantageous to add a small amount of a defoaming agent to the mixture.

After dispersing the prepolymers in the aqueous fluid the prepolymers are reacted under chain extension conditions to obtain the aqueous polyurethane dispersion. Chain extension can be obtained by reacting with water or with said polyamines. Polyamines are preferably aliphatic or cycloaliphatic diamines, although trifunctional or higher functional polyamines may also be included for producing a particular degree of branching.

Examples of suitable aliphatic polyamines include ethylenediamine, 1,2- and 1,3-propylenediamine, 1,4-tetramethylenediamine, 1,6-hexamethylenediamine, the isomeric mixture of 2,2,4- and 2,4,4-trimethylhexamethylenediamine, 2-methylpentamethylenediamine, and bis(β-aminoethyl)amine(diethylenetriamine).

Suitable cycloaliphatic polyamines include 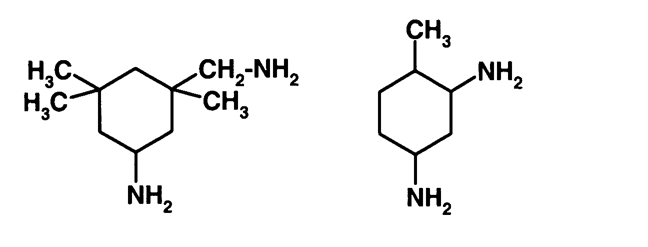 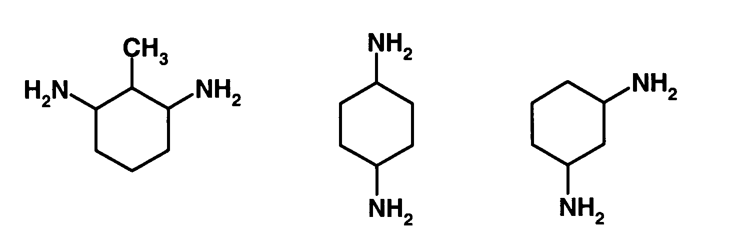 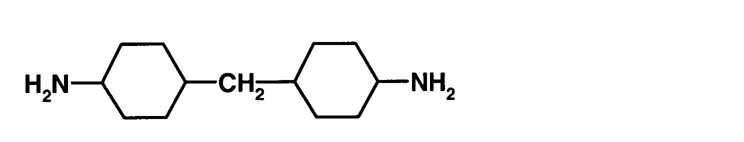 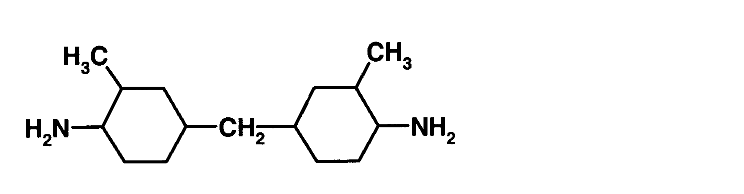 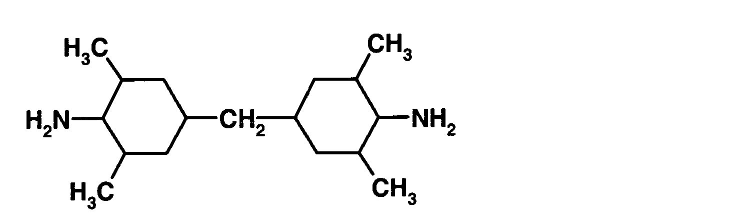 and heterocyclic diamines like piperazine.

Araliphatic polyamines such as 1,3- and 1,4-xylylenediamine or α,α,α',α'-tetramethyl-1,3- and -1,4-xylylenediamine may also be used as chain lengthening monomers.

Long chain polyamine based on polyethyleneglycol or polyethylene/polypropylene copolymer backbones are also suitable.

Hydrazine, hydrazine hydrate, and substituted hydrazines are also to be regarded as diamines for the purpose of this invention. Examples include methyl hydrazine, N,N'-dimethyl hydrazine and their homologs, and acid dihydrazides, such as carbodihydrazide, oxalic acid dihydrazide, the dihydrazides of malonic acid, succinic acid, glutaric acid, adipic acid, β-methyladipic acid, sebacic acid, hydracrylic acid and terephthalic acid, semicarbazidoalkylene hydrazides such as β-semicarbazidopropionic acid hydrazide, semicarbazido alkylene carbazic esters such as 2-semicarbazidoethyl carbazic ester, or aminosemicarbazide compounds such as β-aminomethylsemicarbazido carbonate.

Water-soluble diamines such as ethylenediamine, 1,3- propanediamine, methaxylylenediamine, 1,3-bis-[aminoethyl]cyclohexane, 2,5- or 2,6-bis-[aminoethyl]bicyclo[2,2,1]heptane piperazine or hydrazine are preferably used.

The aqueous polyurethane dispersions of the present invention are useful as or for the preparation of coating compositions. Therefore, the dispersions may additionally comprise further compounds such as fillers, pigments, carbon black, silica salts and dispersions of aluminum or clay.

Certain properties of the coatings prepared from the aqueous polyurethane dispersions of the present invention such as the handle or the surface smoothness, may be modified by means of oligomeric compounds with molecular weights from 300 to 6000 (preferably from 500 to 1500) containing polysiloxane segments and having at least two isocyanate reactive groups. Difunctional polysiloxanes containing organofunctional end groups are preferably used. Such compounds have structural units of the formula -O-Si(R")2- wherein R" represents a Cl-4 alkyl group or a phenyl group (preferably a methyl group).

The aqueous coating compositions according to the invention are stable and suitable for storage and transport and may be worked up at any later time. The properties of coatings obtained can be varied according to the selected chemical composition and the urethane group content. Thus, soft, sticky layers and thermoplastic or thermoweldable products with various degrees of hardness up to glass-hard duroplasts may be obtained. The hydrophilic character of the products may also vary within certain limits. The elastic products may be thermoplastically processed at elevated temperatures, for example, at from 100°C to 180°C, provided they are not chemically cross-linked.

The coating compositions according to the invention are suitable for coating or dressing and impregnating woven and non-woven textiles, leather, paper, hard fibers, straw, and paper-type materials. For this purpose, the dispersions or pastes can be applied to a porous support which subsequently remains bonded to the finished product, for example, woven or non-woven textiles or fiber mats, felts or non-woven webs or paper webs, foam sheets, or split leather, which bring about instant solidification of the coating due to the suction effect of such substrates. The resultant product is subsequently dried at elevated temperature and optionally pressed. Drying may also be carried out on smooth, porous, or non-porous materials, such as metal, glass, paper, cardboard, ceramic materials, steel sheeting, silicone-rubber, or aluminum foils. The finished sheet structure is subsequently lifted off and used as such or applied to a substrate by the reversal process entailing gluing, flame backing, or calendering. Application by the reversal process may be carried out at any time.

The coating composition may be applied to the substrate by direct spread coating using coating knives, rollers, or wire coaters. It is customary to apply several coats in succession, preferably in two coats, so that the total thickness of the coating composed of undercoat and to coat(s) amounts to 10 to 100 µm (preferably 20 to 60 µm).

The topcoat that can subsequently be applied protects the entire combination of layers against mechanical stress and abrasion.

Application of the coating combination composed of undercoat and top coat may also be carried out by the so-called reversal process, in which the top coat is first applied to a separating support and dried, and, after application of a second undercoat or bonding coat, the textile substrate is lightly pressed into the still moist layer. After drying, a firmly bonded combination of coating and substrate is obtained. This bonded combination is detached from the separating support and is substantially similar in its structure to the direct coating product described above.

The coatings, which are exceptionally permeable to water vapor and absolutely resistant to drops, may also be prepared from aqueous dispersions containing pigments and/or dyes. Hydrophobicizing agents such as fluorocarbon resins, waxes, and oils may also be added, provided they to not unduly impair the permeability to water vapor. Crosslinking additives that undergo a reaction on their own or with the polyurethane polymers only in the finished coating, generally by the action of heat, may also be used. Examples of such compounds include (partially) etherified melamine formaldehyde resins (e.g., hexamethylol melamine), polyisocyanates that are optionally blocked and have 3 or more isocyanate groups (e.g., based on tris(isocyanatohexyl) isocyanurate and tris(isocyanatohexyl)biuret), polycarbodiimide and polyaziridine.

The invention further relates to the use of coating compositions according to the invention for the preparation of water vapor permeable coatings, in particular, on flexible substrates, such as textiles, leather, paper, and the like.

The aqueous polyurethane dispersion of the present invention has a low viscosity at high solids content 30% or higher, films and coatings obtained with these dispersions are highly water vapor permeable, present excellent mechanical properties and cure easily. In particular the dispersions of the present invention have lower viscosity compared to dispersions obtained from only one prepolymer containing both ionic and non-ionic hydrophilic groups. Moreover, the water vapor permeability of a coating prepared from the dispersions of the present invention is higher compared to the water vapor permeability of a coating obtained from only one prepolymer at equal polyethylene glycol content. Furthermore, the mechanical properties of uncured films and coatings are better in particular with respect to tenacity and resilience, and an easier curing with melamine or isocyanate is obtained.

The following examples further illustrate details for the preparation and use of the compositions of this invention.

### Example 1

Two NCO terminated prepolymers were synthesized in two different reactors: 407.2 g of the first one (PPA - NCO/OH = 1.32) were obtained by mixing together at 60°C: 224.2 g of polytetramethylene glycol having an average molecular weight of 1000, 9.6 g of dimethylolpropionic acid and 86.4 g of isophoronediisocyanate in 80 g of N-methylpyrrolidone. The mixture was heated with stirring until a homogeneous mix was obtained, then 0.4 g of DBTL (dibutyltindilaurate) were added and the mass exothermed. After 2 hours of reaction at 90°C, excess of isocyanate was controlled (theoretical value 0.47 meq NCO/g, obtained 0.51 meq NCO/g), the prepolymer was cooled down to 60°C and 7.2 g of triethylamine were added.

600 g of the second prepolymer (PPB - NCO/OH = 1.21) were obtained by mixing together at 60°C: 331.2 g of polyethylene glycol having an average molecular weight of 600 and 148.8 g of isophoronediisocyanate in 120 g of N-methylpyrrolidone. The mixture was heated with stirring until a homogeneous mix was obtained, then 0.6 g of DBTL (dibutyltindilaurate) were added and the mass exothermed. After 2 hours of reaction at 90°C, excess of isocyanate was controlled (theoretical value 0.24 meq NCO/g, obtained 0.25 meq NCO/g) and the prepolymer was cooled down to 60°C.

PPA and PPB are mixed just before dispersion. 961 g of water and 0.6 g of Dehydran® DH1293 (defoaming agent from Henkel KGaA) were mixed in a third reactor and maintained at 20-25°C. The mix of the two prepolymers was dispersed (with high shear) into the water in 20 minutes. 31.2 g of a 15% water solution of hydrazine was then added to the dispersion and the temperature maintained below 25°C.

2 kg of 40% NV (non volatile) 10% NMP containing, milky like water dispersion was obtained.

### Comparative example 2

This example is a polyurethane composition very similar to the one of example 1 but was made with only one prepolymer.

1018 g of NCO terminated prepolymer (NCO/OH = 1.26) were obtained by mixing together at 60°C: 200.8 g of polytetramethylene glycol having an average molecular weight of 1000, 320.15 g of polyethylene glycol having an average molecular weight of 600, 23.6 g of dimethylolpropionic acid and 255.5 g of isophoronediisocyanate in 200 g of N-methylpyrrolidone. The mixture was heated with stirring until a homogeneous mix was obtained, then 1.0 g of DBTL (dibutyltindilaurate) was added and the mass exothermed. After 2 hours of reaction at 90°C, excess of isocyanate was controlled (theoretical value 0.48 meq NCO/g, obtained 0.49 meq NCO/g), the prepolymer was cooled down to 60°C and 17.8 g of triethylamine were added.

1660 g of water and 0.8 g of Dehydran® DH1293 (defoaming agent from Henkel KGaA) are mixed in a second reactor and maintained at 20-25°C.

The prepolymer was dispersed (with high shear) into the water in 20 minutes. 43.5 g of a 15% water solution of hydrazine was then added to the dispersion and the temperature maintained below 25°C.

2.7 kg of 30% NV (non volatile) 7.5% NMP containing, translucid water dispersion was obtained. Tentative has been made to obtain the same polyurethane at higher solids content resulting in very viscous gel-like dispersion at 40% NV.

### Example 3

Two NCO terminated prepolymers were synthesized in two different reactors: 406.6 g of the first one (PPA - NCO/OH = 1.26) were obtained by mixing together at 50°C: 224.2 g of polytetramethylene glycol having an average molecular weight of 1000, 9.6 g of dimethylolpropionic acid and 68.8 g of toluenediisocyanate in 80 g of acetone. The mixture was heated with stirring until a homogeneous mix was obtained, then 0.06 g of DBTL (dibutyltindilaurate) were added and the mass exothermed. After 3 hours of reaction at 70°C, excess of isocyanate was controlled (theoretical value 0.41 meq NCO/g, obtained 0.46 meq NCO/g) and the prepolymer was cooled down to 40°C.

600 g of the second prepolymer (PPB - NCO/OH = 1.35) were obtained by mixing together at 50°C: 388.8 g of polyethylene glycol having an average molecular weight of 1000 and 91.2 g of toluenediisocyanate in 120 g of acetone. After the exotherm phase, the mixture was heated at 70°C for two hours, excess of isocyanate was controlled (theoretical value 0.45 meq NCO/g, obtained 0.41 meq NCO/g) and the prepolymer was cooled down to 40°C.

PPA and PPB were mixed just before dispersion. 1193 g of water, 0.6 g of Dehydran® DH1293 (defoaming agent from Henkel KGaA) and 6.6 g ethylmorpholine are mixed in a third reactor and maintained at 20-25°C.

The mix of the two prepolymers was dispersed (with high shear) into the water in 20 minutes. After complete dispersion of the mix of prepolymers, the dispersion was left two hours at 35-40°C in order to complete the chain extension with water. After that, acetone was stripped at 55-60°C under vacuum.

2 kg of 40% NV (non volatile) solvent free milky like water dispersion was obtained.

### Example 4

Two NCO terminated prepolymers were synthesized in two different reactors: 466.3 g of the first one (PPA - NCO/OH = 1.31) were obtained by mixing together at 60°C: 181.8 g of polytetramethylene glycol having an average molecular weight of 2000, 19.8 g of 1,4-butanediol, 21.6 g of dimethylolpropionic acid and 86.4 g of isophoronediisocyanate in 90 g of N-methylpyrrolidone. The mixture was heated with stirring until a homogeneous mix was obtained, then 0.4 g of DBTL (dibutyltindilaurate) was added and the mass exothermed. After 4 hours of reaction at 90°C, excess of isocyanate was controlled (theoretical value 0.64 meq NCO/g, obtained 0.66 meq NCO/g), the prepolymer was cooled down to 60°C and 16.3 g of triethylamine were added.

450 g of the second prepolymer (PPB - NCO/OH = 1.90) were obtained by mixing together at 60°C: 168.0 g of polyethylene glycol having an average molecular weight of 1000 and 71.2 g of isophoronediisocyanate in 60 g of N-methylpyrrolidone. The mixture was heated with stirring until a homogeneous mix was obtained, then 0.1 g of DBTL (dibutyltindilaurate) were added and the mass exothermed. After 4 hours of reaction at 90°C, excess of isocyanate was controlled (theoretical value 1.01 meq NCO/g, obtained 1.06 meq NCO/g) and the prepolymer was cooled down to 60°C.

PPA and PPB were mixed just before dispersion. 1320 g of water and 0.3 g of Dehydran® DH1293 (defoaming agent from Henkel KGaA) are mixed in a third reactor and maintained at 20-25°C. The mix of the two prepolymers was dispersed (with high shear) into the water in 20 minutes. 37.1 g of a 50% water solution of 1,3-bis[aminoethyl]cyclohexane was then added to the dispersion and the temperature maintained below 25°C.

2.1 kg of 30% NV (non volatile) 7.2% NMP containing, turbid low viscous water dispersion was obtained.

### Comparative example 5

This example has the same global polyurethane composition as the one of example 1 but was made with only one prepolymer.

766.3 g of NCO terminated prepolymer (NCO/OH = 1.55) were obtained by mixing together at 60°C: 181.8 g of polytetramethylene glycol having an average molecular weight of 2000, 19.8 g of 1,4-butanediol, 21.6 g of dimethylolpropionic acid, 168.0 g of polyethylene glycol having an average molecular weight of 1000 and 208.0 g of isophoronediisocyanate in 150 g of N-methylpyrrolidone. The mixture was heated with stirring until a homogeneous mix was obtained, then 0.5 g of DBTL (dibutyltindilaurate) were added and the mass exothermed. After 3 hours of reaction at 90°C, excess of isocyanate was controlled (theoretical value 0.82 meq NCO/g, obtained 0.76 meq NCO/g), the prepolymer was cooled down to 60°C and 16.3 g of triethylamine were added.

1320 g of water and 0.8 g of Dehydran® DH1293 (defoaming agent from Henkel KGaA) are mixed in a second reactor and maintained at 20-25°C.

The prepolymer was dispersed (with high shear) into the water in 20 minutes. 37.1 g of a 50% water solution of 1,3-bis[aminoethyl]cyclohexane was then added to the dispersion and the temperature maintained below 25°C. 43.5 g of a 15% water solution of hydrazine was then added to the dispersion and the temperature maintained below 25°C.

The resulting polyurethane dispersion was very viscous at 30% NV (non volatile) and has gelified after one day of storage. Dilution up to 18% NV is stable but remains viscous.

### Example 6

The polyurethane dispersions of examples 1 and 3 as well as comparative example 2 are intended to be used as first coat in direct coating. Film properties and solvent resistance are obtained by curing with isocyanate or melamine crosslinkers.

Films evaluated hereafter have been made with dispersions formulated with Cymel385® (melamine formaldehyde resin from Cytec), Ucecoat® POL/C (proprietary acid catalyst) and thickened with UCECOAT®XE430 (polyurethane based thickening agent). The films have been cured 3 minutes at 160°C.

| | | |
|---|---|---|
| Formulation: | 100 p | polyurethane dispersion |
| | 3 p | Cymel®385 |
| | 1.5 p | POL/C |
| | 3 p | XE430 |
| p = parts by weight of the total formulation. | | |

The following results have been obtained:

| Example | 1 | 2 | 3 |
|---|---|---|---|
| Viscosity (mPa s)* | 6900 | 1202 | 5720 |
| % Solids* | 40 | 30 | 40 |
| Curing time** | 1' | > 3' | 1'30" |
| Water vapor permeability*** | 806 | 433 | 714 |

| | | | |
|---|---|---|---|
| * Brookfield viscosity and % solids measured on non-formulated dispersions | | | |
| ** 30 µ films are cured in oven at 150°C. Curing time is the minimum time necessary to obtain a film completely insoluble in DMF. | | | |
| *** Water vapor permeability expressed in g / 24 h /m2 (UCB method 1343/9401) This method comprises putting 150g of dried (1 night at 120°C) silica pearls with humidity indicator in a cup provided with a ring which retain a sample of 100 square cm at its surface, closing the cup. The whole is weighted (m1), put into an oven (such as Vötsch VTKTR/ 130 Mu) during 18 hours at 20°C and 95% relative humidity and, thereafter, weighted again (m2). The water vapor permeability in g/m2/24hrs is given by the relation : Delta m x 24/T x 10.000/S, where Delta m is m2-m1 in g, S is the surface of the sample (100 square cm) and T is the test time (18 hrs). | | | |

The above results demonstrate that the polyurethane dispersion obtained from two different prepolymers according to examples 1 and 3 can be prepared with a higher solids content compared to the polyurethane dispersion of comparative example 2, has a lower curing time and a higher water vapor permeability.

### Example 7

The polyurethane dispersions of example 4 and comparative example 5 are film-forming without cure PU intended to be used as topcoat in direct coating.

The following results have been obtained:

| Example | 4 | 5 | |
|---|---|---|---|
| Viscosity (mPa s)* | 2150 | gel | 15 000 |
| % Solids* | 30 | 30 | 18 |
| Tensile strength** | 42.4 MPa | 31.0 MPa | |
| Elongation at break** | 550% | 460% | |
| Water vapor permeability*** | 1114 | 780 | |

| | | | |
|---|---|---|---|
| * Brookfield viscosity and % solids measured on non-formulated dispersions | | | |
| ** Stress/strength measurement made on 100 µ free films at an elongation rate of 50 mm/min. | | | |
| *** Water vapor permeability expressed in g / 24 h/m2 (UCB method 1343/9401) | | | |

The above results demonstrate that the polyurethane dispersion obtained from two different prepolymers according to example 4 can be prepared at 30% NV with a very low viscosity. Viscosity obtained for the same PU structure synthesized with the one prepolymer process according to comparative example 5, is so high that a dilution till 18% NV is necessary in order to simply obtain a storage stable dispersion with a 'workable viscosity'.
The dispersion of the example 4 permits also to obtain films with better mechanical properties and an higher water vapor permeability than the one obtained with the comparative example 5.

## Claims

1. Aqueous polyurethane dispersion, obtainable by a method comprising the step of chain extension of a blend comprising
a) a hydrophilic NCO-terminated polyurethane prepolymer (PPA) containing ionic hydrophilic groups, said prepolymer being essentially free of non-ionic hydrophilic groups, and
b) a hydrophilic NCO-terminated polyurethane prepolymer (PPB) containing non-ionic hydrophilic groups, obtained from the reaction of non-ionic hydrophilic polyols, diisocyanates and optionally short chain polyols, said prepolymer being essentially free of ionic hydrophilic groups.

2. Aqueous polyurethane dispersion according to claim 1, wherein the method of obtaining said dispersion comprises the steps of
- separately synthesizing said prepolymers PPA and PPB;
- dispersing said prepolymers in an aqueous fluid; and
- reacting said prepolymers together under chain extension conditions to obtain an aqueous polyurethane dispersion.

3. Aqueous polyurethane dispersion according to any of the preceding claims, wherein said prepolymer PPA is obtained from the reaction of hydrophobic polyols, diisocyanates, polyols containing ionic groups and optionally short chain polyols.

4. Aqueous polyurethane dispersion according to claim 3, wherein said prepolymer PPA contains 50-80 % wt. residues of hydrophobic polyols, 15-45 % wt. residues of diisocyanates, 3-12 % wt. residues of polyols containing ionic groups and optionally the remaining to 100% wt. residues of short chain polyols, based on the total weight of the prepolymer PPA.

5. Aqueous polyurethane dispersion according to any of the preceding claims, wherein said prepolymer PPB contains 60-90% wt. residues of non-ionic hydrophilic polyols, 10-40% wt. residues of diisocyanates and optionally the remaining to 100% wt. residues of short chain polyols, based on the total weight of the prepolymer PPB.

6. Aqueous polyurethane dispersion according to any of the preceding claims, wherein the non-ionic hydrophilic polyols are polyethers having an average molecular weight Mw of 400-6000 and containing at least 70% wt. polyethylene glycol, based on the total weight of the polyether.

7. Aqueous polyurethane dispersion according to any of the preceding claims, wherein the prepolymer PPA is free of non-ionic hydrophilic groups and the prepolymer PPB is free of ionic hydrophilic groups.

8. Aqueous polyurethane dispersion according to any of the preceding claims, wherein the chain extension is obtained by reacting with at least one polyamine.

9. Use of a hydrophilic NCO-terminated prepolymer containing ionic hydrophilic groups, said prepolymer being essentially free of non-ionic hydrophilic groups, and a hydrophobic NCO-terminated prepolymer containing non-ionic hydrophilic groups, said prepolymer being essentially free of ionic hydrophilic groups, for the preparation of an aqueous polyurethane dispersion.

10. Coating composition comprising an aqueous polyurethane dispersion according to any of claims 1 to 8.

11. Use of a coating composition according to claim 10 for coating a substrate.

12. Use of a coating composition according to claim 10 for the preparation of water vapor permeable coatings, in particular, on flexible substrates, such as textiles, leather, paper, and the like.

13. Substrate coated with a coating obtainable by coating said substrate with a coating composition according to claim 10.
